Europäisches Patentamt

European Patent Office

Office européen des brevets

(11) Publication number: **0 124 580 B1**

## EUROPEAN PATENT SPECIFICATION
### published in accordance with Art. 158(3) EPC

(45) Date of publication of patent specification: **03.04.91**   (51) Int. Cl.⁵: **G11B 21/08**

(21) Application number: **83903682.9**

(22) Date of filing: **13.10.83**

(86) International application number:
**PCT/US83/01614**

(87) International publication number:
**WO 84/01849 (10.05.84 84/12)**

(54) **FINE AND COARSE SERVO SYSTEM FOR ACCESS AND TRACKING ON AN OPTICAL DISK.**

(30) Priority: **01.11.82 US 438133**

(43) Date of publication of application:
**14.11.84 Bulletin 84/46**

(45) Publication of the grant of the patent:
**03.04.91 Bulletin 91/14**

(84) Designated Contracting States:
**FR GB**

(56) References cited:
EP-A- 0 019 379      DE-A- 2 033 557
FR-A- 2 217 761      FR-A- 2 366 636
GB-A- 1 516 285      GB-A- 2 016 747
JP-A-57 130 240      US-A- 3 657 707
US-A- 4 094 010      US-A- 4 123 147
US-A- 4 198 701

(73) Proprietor: **STORAGE TECHNOLOGY PARTNERS II**
**2270 South 88th Street**
**Louisville Colorado 80028(US)**

(72) Inventor: **STAHL, Karl, John**
**4769 Tanglewood Trail**
**Boulder, CO 80301(US)**
Inventor: **JOHNSON, Albin, Kenneth**
**10639 N. 65th Street**
**Longmont, CO 80501(US)**
Inventor: **REDDERSEN, Brad, Rawson**
**3236 W. 11th Avenue Ct.**
**Broomfield, CO 80020(US)**
Inventor: **MUCKLE, Alexander, Montgomery**
**3625 Endicott Drive**
**Boulder, CO 80303(US)**

PATENTS ABSTRACTS OF JAPAN, vol. 6, no. 229 (P-155)[1107], 16th November 1982; & JP - A - 57 130 240 (OLYMPUS KOGAKU KOGYO K.K.) 22-08-1982

PATENTS ABSTRACTS OF JAPAN, vol. 2, no. 113, 20th September 1978, page 6347E78; & JP - A - 53 79 335 (HITACHI SEISAKUSHO K.K.) 13-07-1978

PATENTS ABSTRACTS OF JAPAN, vol. 7, no. 150 (P-207)[1295], 30th June 1983; & JP - A - 58 60 439 (NIHON KOUGAKU KOGKYO K.K.) 09-04-1983

PATENTS ABSTRACTS OF JAPAN, vol. 2, no. 113, 20th September 1978, page 6347E78; & JP - A - 53 79 335

PATENTS ABSTRACTS OF JAPAN, vol. 7, no. 150 (P-207)(1295), 30th June 1983; & JP - A - 58 60 439

(74) Representative: UEXKÜLL & STOLBERG Patentanwälte
Beselerstrasse 4
W-2000 Hamburg 52(DE)

## Description

BACKGROUND OF THE INVENTION

This invention relates to optical disk data storage systems and more particularly to a servo system which includes both fine and coarse access and tracking systems according to US-A-4507763 which is considered to correspond to JP-A-57-130240 whose priority is claimed by said US-A.

Optical data storage systems which utilize a disk to optically store information have been the object of extensive research. Like magnetic disk units, these optical disk storage units must have a servo system which controls the positioning of the read/write head to provide direct access to a given track of data recorded thereon, and to accurately follow this track while it is being read or when it is initially written onto the storage medium. To date, most of the prior art optical storage systems have had one of three types of servo systems: physical groove, external encoder or optical feedback.

The simplest of the systems is the physical groove as is shown, for example, in U.S. Patents 4,260,858 and 3,654,401. In such systems, the optical disks are provided with physical grooves, either in a spiral or circular pattern, and an optical read/write head is provided with a stylus or other physical means of engaging the groove. There are several drawbacks associated with this type of system. First, wear is a significant factor. Typically, the disks are formed using dies or molds, which dies or molds are subject to wear during the manufacturing process, hence necessitating their replacement and creating tolerance problems in the formed disks. Physical contact with the head guide stylus during use also causes disk wear, introducing noise. Further, rapid access involving radial movement of the head is difficult to accomplish.

One known approach to overcome the problems associated with the physical groove systems is to dedicate an entire data disk surface to servo tracks. This approach has worked well in magnetic disk systems, where a plurality of magnetic disks are usually provided in a stacked disk pack with a common spindle. The use of one disk surface for servo tracks does not seriously detract from the data storage capacity of such a system. Optical disk systems, on the other hand, in order to be suitable for use in a commercial environment, desirably have only one disk on a spindle with at most two surfaces available for recording both the data and servo information. It is not feasible therefore, to dedicate an entire optical disk surface to servo tracks without severely sacrificing data storage capacity.

While magnetic disk servo systems can be adapted for use with optical disks, this approach is also very inefficient. Data track density can be made much higher in optical recording systems than in magnetic disk systems. Optical systems are capable of recording in an extremely narrow data track approaching one micron in width. This allows an increase in track densities on the order of 15 times the densities used in state of the art magnetic disk systems. An extremely accurate and sensitive servo system must be used to position the read/write head over such a track.

The optical disk systems that have heretofore provided the highest capability have employed optical feedback for tracking. Changes in reflected or transmitted illumination received from the disk are monitored by appropriate equipment. Illumination changes indicate the occurance and direction of an off-track condition. Appropriate circuitry senses the change and activates a galvanometer controlled mirror in the light path steering the light beam(s) in the appropriate direction to continue track following. Such tracking systems can be extremely accurate and responsive but have range limitations on the order of 100 microns . This limitation arises essentially from the optics through which the light travels between the mirror and the disk. Galvanometer mirror systems allow rapid random access within this range but the optical head must be moved across the disk to obtain access to wider areas. Modern data storage applications require fairly rapid access to any data storage area on the disk, and thus require accurate track accessing over a range of many centimeters and accurate track following upon access.

Galvanometer type servo positioning systems typically access other tracks in one of three ways:

(1) after accessing a first track (the starting point), successively adjacent tracks are accessed, and identified, one at a time, until the desired track is reached;

(2) after identifying the track presently accessed (the starting track), and the track to be accessed (the target track), a determination is made as to the number of tracks n between the starting track and the target track, and whereupon access is achieved by moving the head n tracks, as determined by counting the individual tracks between the starting and target tracks; locking onto each track succesively as the count progresses; or

(3) after identifying the starting and target tracks as in method (2) above, a velocity servo is enabled which achieves access by forcing the galvanometer to follow a prescribed velocity profile that steers the optical beam to the vicinity of the target track, whereupon the track identification is read to verify that the desired target track has been reached.

Access method (1) above is extremely slow.

Method (2), on the other hand, provides faster access and can be realized with relatively simple counting circuitry. Method (3) provides the fastest access, but also requires the most complex circuitry for its realization. All three methods, however, are limited to the range of the galvanometer system, and do not, therefore, provide the needed rapid random access to all portions of the disk.

It is also a desirable feature in commercial optical disk systems to provide a removable/replacable disk. This allows disks to be readily changed so that information recorded on different disks can be easily accessed. In a removable/replacement disk system, gross errors in alignment (up to several hundreds of microns) of the disk with respect to the head are unavoidable. Such alignment errors will typically exceed the 100 micron tracking radius of most galvanometer systems. It is therefore necessary to provide a servo system which will compensate for these gross errors and which will reliably position the read/write head with direct access over a large area of the optical disk.

Various systems have been developed to improve random access, or compensate for gross positional errors, or both. For example, U.S. Patent 4,094,010 utilizes a plurality of fixed read/write heads spanning an entire disk surface. Each head is associated with a single servo track and a band of data tracks. While rapid access is assured by such a system, the plethora of tracking heads and ancillary equipment required greatly increases the cost and complexity of the system. The optical systems of U.S. Patents 4,275,275, 4,160,270 and 4,282,598 each develop a coarse tracking error signal for use by a coarse positioning system to control head movement during tracking. The coarse track signal is developed from the tracking error signal generated by the galvanometer fine tracking system. In U.S. Patent 4,037,252 a coarse control signal is generated from the movement of the fine tracking galvanometer mirror itself as opposed to the signal developed from illumination data obtained from the disk. A significant drawback of these coarse positioning systems is that they do not decouple fine tracking errors from coarse tracking errors, thereby providing a less stable system. Moreover, these systems provide no improved direct random access capability.

## SUMMARY OF THE INVENTION

In accordance with the present invention, as characterized in the independent apparatus claim 1 and the independent method claim 7 the constraints of a commercial optical data storage system are met by providing a servo system which has both a coarse access and tracking system and a decoupled fine access and tracking system. Servo signals are pre-recorded on servo tracks concentrically spaced about the axis of the disk and positioned between data bands. These servo tracks can desirably occupy less than 5% of the recordable space on the optical disk. The use of an entire surface for recording servo tracks is not required. The coarse system provides direct access to data bands between the servo tracks, and also provides tracking with respect to the data band tracks. In accordance with the invention, a detector is provided which receives reflected light from an illuminated portion of the disk surface which spans at least the distance between two servo tracks so that at least one servo track is always illuminated. In preferred embodiments of the invention, a linear solid state detector array is used for this purpose. This allows direct access to the entire disk surface. The fine access system of the present invention responds to light received from a single data track on the disk. The fine system utilizes conventional optical tracking and accessing techniques that have proven to be reliably accurate for the high track densities achievable with optical disks.

In accordance with the invention, two different elements in the optical system/head positioning mechanism are controlled by the servo system. In a preferred embodiment the head access mechanism includes a carriage which is movable radially with respect to the disk. This is controlled by the coarse access and tracking system. The optical system for projecting the read and write light beams onto the disk surface is independently servo controlled by the fine access and tracking system to provide the accurately controlled access to and tracking of a single data track on the disk.

The foregoing and other objects, features and advantages of the invention will be better understood from the following more detailed description and appended claims.

## BRIEF DESCRIPTION OF THE DRAWINGS

Fig. 1 is a block diagram of the present invention;

Fig. 2 schematically shows the principal elements of Fig. 1;

Fig. 3 is a side view showing the relationship between the optical disk, fixed and moving optics packages, and a linear actuator for the read/write heads;

Fig. 4 shows an exemplary configuration of the fixed optics;

Fig. 5 depicts the servo and data tracks on a disk;

Figs. 6 and 7 are circuit diagrams of illustrative linear detector circuits used for coarse control; and

Fig. 8 is a diagram of the output of the linear detector circuit of Fig . 7 during radial movement of the head across the disk.

DESCRIPTION OF THE PREFERRED EMBODIMENT

The present invention is best understood by reference to the accompanying drawings wherein like numerals will be used to present like parts throughout.

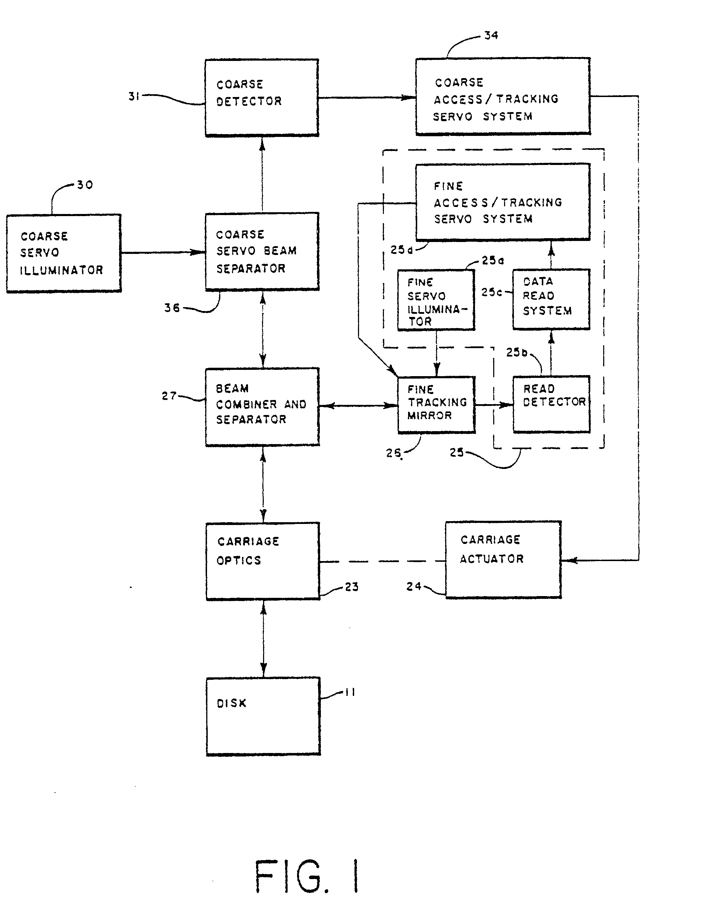

Fig. 1 shows a block diagram of the present invention. The various optical paths associated with the system are shown as the electrical paths are indicated. Mechanical coupling, as occurs between the carriage actuator 24 and optics 23 is indicated by a dashed line.

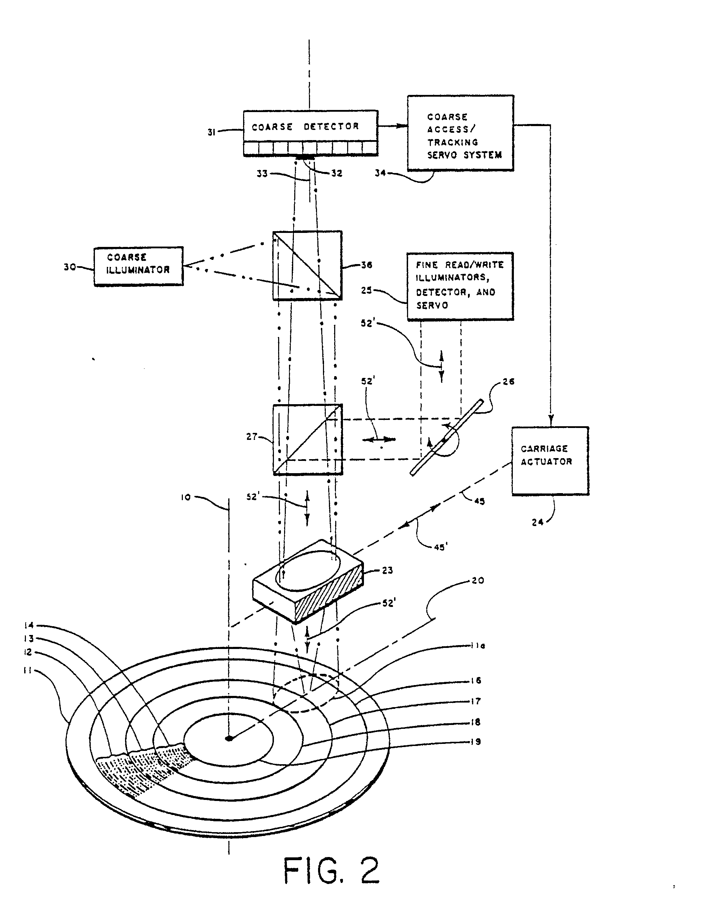

Referring next to both Figs. 1 and 2 the optical disk storage system of the present invention can be explained. The system allows reading and writing from and to the surface of a disk 11 having a rotational axis 10 and a plurality of concentric data bands, 12-14 in (Fig. 2). Each of the data bands includes a plurality of data tracks concentrically spaced about the rotational axis. The surface of the disk 11 has pre-recorded thereon, during manufacture, a plurality of optically readable servo tracks 16-19, concentrically and uniformly spaced about the rotational axis of the disk and positioned between the data bands. Also desirably pre-recorded in each data band is a single data track which is used as a starting guide in writing other data tracks in the band.

The disk 11 is rotated about its axis 10 by conventional means. An optical read/write head, depicted by the carriage optics 23, is positioned adjacent to the surface of the disk 11. Carriage actuator 24 selectively moves the read/write head along a radial axis 20 (Fig. 2), thereby moving the carriage optics 23 in a radial direction with respect to the disk 11 in order to access the data bands thereon. Mechanical motion of the carriage optics 23 is depicted in FIG. 2 as a dotted line 45, with motion being possible in both directions as indicated by the double headed arrow 45'.

A fine servo illuminator 25a (Fig. 2) projects a read or write light beam(s) 52' onto the surface of the disk 11 so as to access data tracks thereon. In order to access the disk surface this beam 52' is reflected by a fine tracking mirror 26, passes through a beam combiner and separator 27, as well as through the carriage optics 23. A read detector 25b reads light which has been reflected from the accessed recorded data track. This reflected light passed through the carriage optics 23 and beam combiner and separator 27 before reaching the read detector 25b. The read detector converts this light to an equivalent electrical signal(s). This read electrical signal is, in turn, supplied to a data read system 25c, and to a fine access/tracking servo system 25d.

In accordance with the present invention, the servo system for access to and tracking of the servo tracks includes a coarse illuminator 30 which projects light, represented as dashed-double dot lines in Fig. 2 through the coarse servo beam separator 36, the beam combiner and separator 27, and the carriage optics 23 onto a relatively broad portion 11a of the disk surface. A optical detector 31 detects reflected light, represented as dashed-single dot lines in Fig. 2, from the portion 11a of the disk surface. It is noted that the illuminated portion 11a of the disk surface spans at least the distance between two servo tracks, and thereby always illuminates at least one servo track. If desired, the system can also be implemented by illuminating and detecting a plurality of servo tracks. As shown in Fig. 2, light is reflected from the portion 11a of the disk 11 between servo tracks 16 and 18 with the servo track 17 being projected onto the detector 31 as the stripe of light indicated at 32. The detector 31 has a center null position 33. The output of linear detector 31 is applied to a coarse access/tracking servo system 34. This system is connected in a servo loop with the actuator 24 which moves the read/write head (represented schematically by the carriage optics 23) into radial proximity of a selected servo track so that the fine access and tracking system 25d can accurately position read or write beams on a selected data track. As indicated previously, light reflected from a single data track on the disk is passed by means of the carriage optics 23, beam separator 27, and tracking mirror 26, and is detected by read detector 25b, the output of which is applied to the fine access/tracking servo system 25d through the data read system 25c. The read or write beams 52' from the illuminator 25a are moved radially with respect to the optical disk 11 by means of the tracking mirror 26, thereby providing for fine selective control of the beam's radial position. The tracking mirror 26, which may be a conventional galvanometer controlled mirror(s), is controlled by the fine access/tracking servo system 25d.

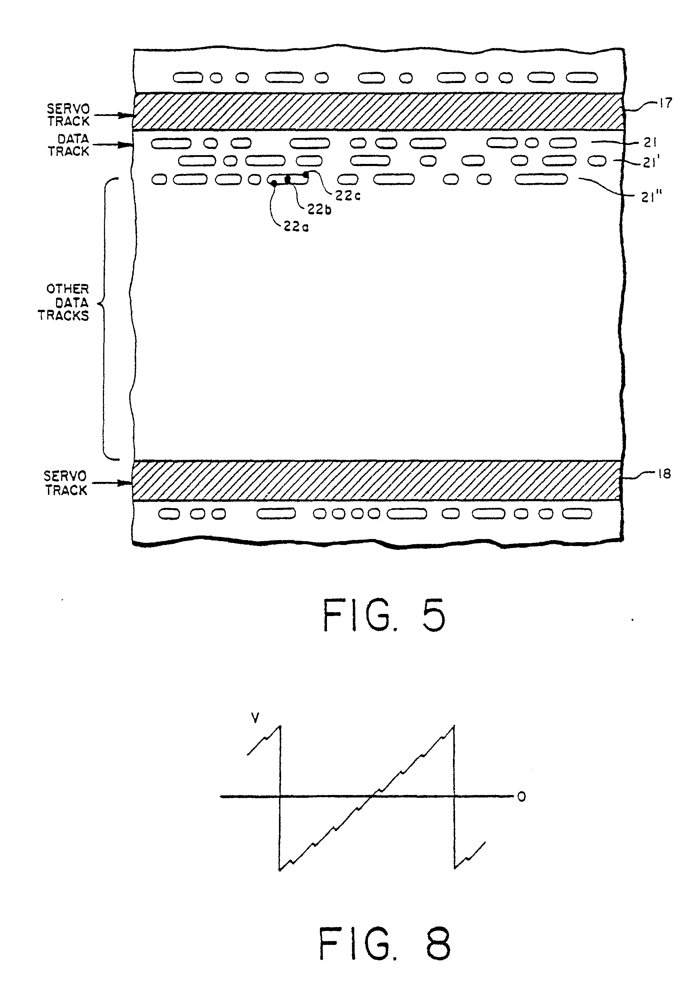

Referring next to Fig. 5, the servo tracks 17 and 18, with exemplary data tracks 21' and 21" recorded therebetween, are shown. In a preferred embodiment of the invention, 5 to 100 data tracks are typically recorded between servo tracks. One of these data tracks, for example 21, is a pre-recorded home address track which is followed during the recording of the next adjacent data track, for example 21'.

Fig. 5 illustrates the operation of an exemplary and conventional optical read system using three beams indicated by three spots of light 22a, 22b and 22c projected on the disk surface. The center spot 22b is used for data reading and focus. The adjacent spots 22a and 22c overlap the data track 21" and provide optical feedback for fine tracking. Light reflected from the spots 22a-22c is detected and applied to the fine access/tracking servo system 25d to follow a given track. When the read beam is on track, the adjacent spots 22a and 22c reflect equal light. If the beams go off track, the light reflected from the two spots 22a and 22c is unbalanced, a condition detected by associated circuits, not depicted, which generate a fine tracking correction signal. This type of tracking also is used for writing in the next adjacent track. For example, in writing the data track 21' on the surface of the disk 11, the fine tracking servo system 25d follows a previously recorded adjacent data track, in this case the pre-recorded home address track 21, while the write beam writes in the track 21'. Thereafter, the fine tracking servo system 25d follows track 21' while the next adjacent track is written, and so on.

In order to allow the servo tracks to be easily discriminated from the data tracks, the servo tracks are preferably three to five times the width of the data tracks. The servo tracks provide improved data track following capability in accordance with this invention by providing coarse tracking control of the read/write head represented schematically in Fig. 2 by the carriage optics 23. The coarse tracks are also used to permit rapid random access to a data band, regardless of whether any data has been recorded in the fine track area. This provides the ability to skip to randomly selected coarse bands for writing, an advantage unique to this approach. Seeking to a band is accomplished simply by counting coarse tracks, in conjunction with analog or digital servo techniques commonly used in magnetic disk drives. Another advantage of this method of seeking is the reduced sensitivity to focus errors. A system that relies on keeping a 1 micron spot sharply in focus during seeking will be much more sensitive to vibration induced during the seek than will the system of the present invention, which features an enlarged servo track providing a more easily recognized return illumination.

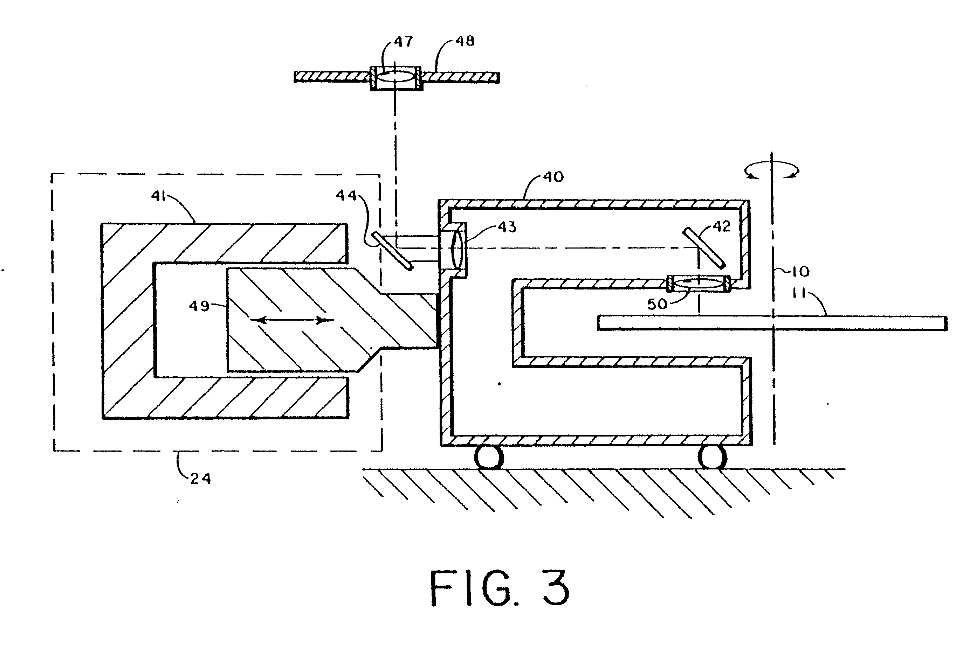

Fig. 3 is a side view that schematically shows the relationship between the optical disk 11 and a moving optics package 40 that is driven by the carriage actuator 24 into a read/write relationship with any of the tracks of the disk 11. While Fig. 3 depicts reading/writing on only one side of the disk 11 it is to be understood that the present invention could also be used with a two sided disk system. The carriage actuator 24 may be realized with a linear motor, such as a voice coil motor that in-

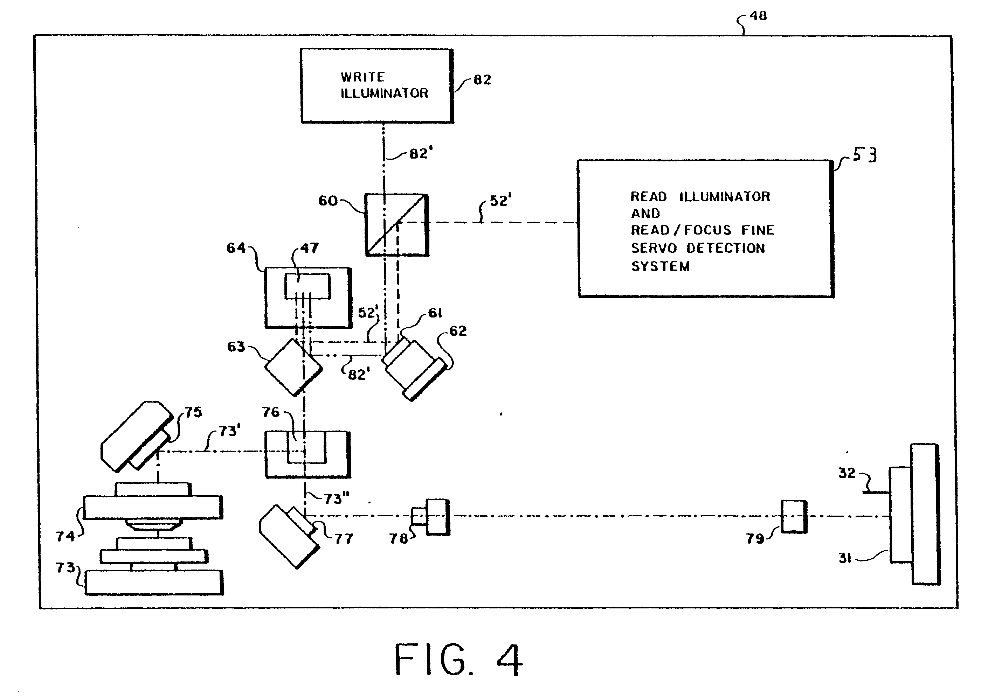

cludes a stationary magnet 41 and a movable coil 49. The optical path for either the read or write light beam(s) to the surface of the disk 11 includes an objective lens 50, mirror 42, telescope lens 43, and mirror 44. Light is transmitted to and from the moving optics package 40 through a suitable, optics package 47 mounted on a fixed optic plate 48 on which the remainder of the optics are mounted and which will be described with reference to Fig. 4.

Referring to Fig. 4, a read light beam(s), indicated by the dashed line 52' is generated by suitable optical circuitry and components 53. The details of the optics 53 are not important to the present invention. Any optics suitable for use with a conventional three spot galvanometer controlled tracking system, or appropriate tracking system, could be used.

The read beam(s) 52' pass through a first wavelength beam splitter 60 to a read galvanometer 62. A mirror surface 61 on the face of the galvanometer 62 reflects the three spot read beams to a second wavelength beam splitter 63 where the beams are reflected through optics 47 held by a suitable mount 64. Transmission of the three spot beams to the optical disk surface from the optics 47 is as depicted in Fig. 3.

It is noted that optical disks used with the present system are of a reflective rather than transmissive nature. Thus, the three read spot beams (indicated by illuminated spots 22a-22c of Fig. 5) are reflected along the same path from the disk surface through the elements of the moving optics package 40 (Fig. 3), through the optics 47 where they are again reflected by the second wavelength beam splitter 63, to the read galvanometer mirror surface 61, through the wavelength beam splitter 60, and into the optical subsystem 53, where suitable detection occurs.

Illumination for the coarse access/tracking servo system is provided by a laser 73 which generates a coarse track beam of light indicated by the dot-dash line 73'. The light beam 73' is a wavelength different from that of the read beam 52. The light beam 73' travels through a lens 74, to a mirror surface 75 and to a polarizing beam splitter 76 which separates the source light from the reflected light at this wavelength. In beam splitter 76, the incident source light 73' is reflected and passes unaffectedly through the wavelength beam splitter 63 to the prism 47 from which it travels to the moving optics package 40 as previously described to the disk surface. The coarse beam spans at least one servo track on the disk surface as indicated in Fig. 2 (item 11a). Reflected light at this wavelength travels back through the prism 47, again unaffectedly through the wavelength beam splitter 63, through the polarizing beam splitter 76 (which separates the reflected beam from the source beam), to a mirror surface 77, through a first lens 78, a second lens 79, and finally to the linear detector 31 (see also Fig. 2.). First lens 78 forms the image plane of the disk on the surface of the detector 31. Lens 79 is a cylinder lens which narrows the elliptical coarse track beam reflected from the disk surface into a sharp line on the face of the detector 31. The reflected beam is indicated as the second dot-dashed line 73″ extending between the beam splitter 76 and the detector 31. The image of the illuminated servo track 19 is again indicated at 32. If the disk is positioned correctly, the image 32 of the servo track 18 is held stationary on the detector 31. If the disk is not positioned perfectly, the image 32 will travel up or down on the detector 31 as the disk rotates. The output of the detector 31 is used to drive the actuator 24 in a manner which keeps the image 32 stationary on the detector during track following. Because of this servo action, the fine access/tracking servo system can perform its function in the same manner as if the disk were perfectly aligned on its spindle. In this manner, the coarse access/tracking servo system compensates for thermal gradients, misalignment (which is inherent in removing and replacing the disk) and disk runout. The servo system of the present invention reduces the apparent radial runout of the disk as seen by the fine tracking system from its actual total value of about plus or minus 100 to 200 microns (typical of removable media devices) by one to two orders of magnititude.

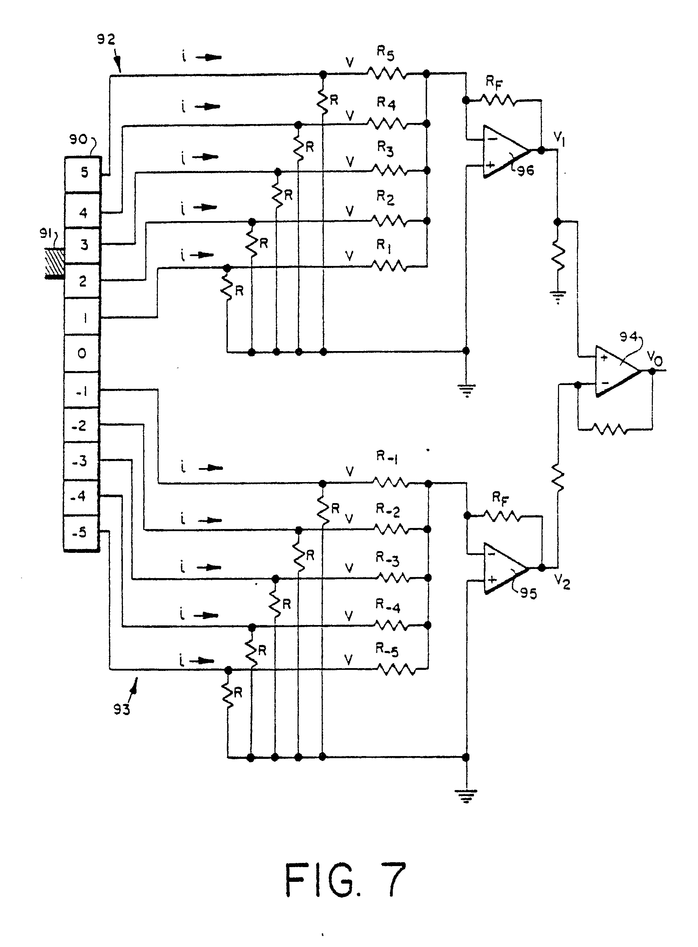

In a preferred embodiment described later with respect to Fig. 7, the length of the detector 31 may be slightly less than the imaged servo track separation (i.e. about one servo track pitch), so that only one servo track appears on the detector 31 at a given time. A signal is produced by the detector 31 that represents the distance of the imaged servo track from the array center (null position 33). This signal is then used to provide position feedback to the linear actuator 24.

Fig. 4 also shows a write beam 82' which originates from a write illuminator 82. The write beam 82' passes through the wavelength splitter 60 and is reflected from the mirror surface 61 of galvanometer 62 and from wave length beam splitter 63 through the prism 47 and hence through the moving optics package 40 to the surface of the disk 11 as previously described. This write beam is optically positioned a prescribed distance from the read beam(s) 52' so that a write track may be written a prescribed distance from a previously written track or a prescribed distance from the home address track, as previously described in connection with Fig. 5.

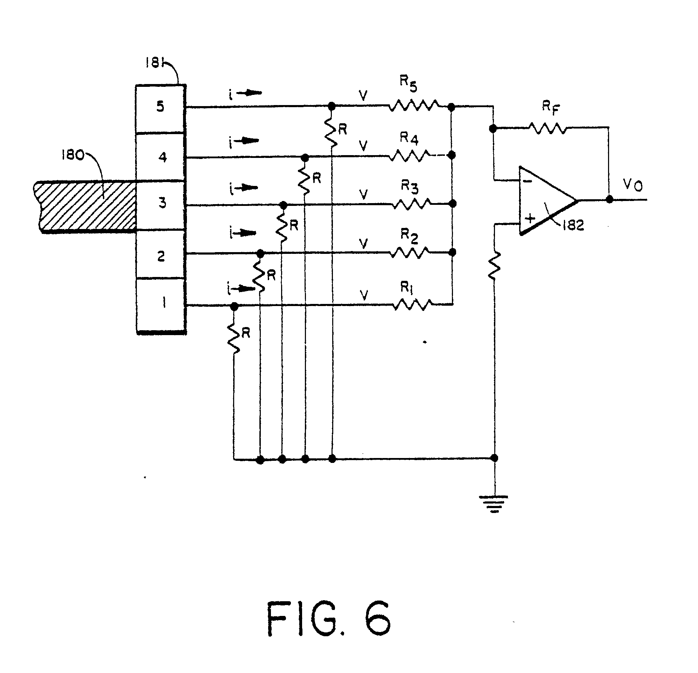

Figs. 6 and 7 depict two ways to convert the output of the detector 31 into a signal proportional to position. Fig. 6 depicts a circuit producing an output voltage $V_o$ proportional to the location of an illuminated stripe 180 on a multi-element photo detector array 181. The current generated by each array element 1 through 5 passes through an identical resistor R and a summing resistor $R_1$ through $R_5$, respectively. The outputs of the resistors R are connected to ground and as is the positive input of an amplifier 182, while the outputs across the resistors $R_n$ (i.e., $R_1$ through $R_5$) are fed into the negative input of the same amplifier 182. Negative feedback is provided by passing the output voltage $V_o$ through resistor $R_F$ and into the negative input of the amplifier 182. Connected in this fashion, the circuit elements form a summing network.

The maximum voltage input to each summing resistor $R_1$ through $R_5$ in Fig. 6 is

$$V = iR$$

where i is the current from any fully illuminated element 1 through 5, respectively, of the array 181. The value of each summing resistor $R_n$ is

$$R_n = R_F/n$$

where n = 1, 2, 3, 4, 5. Then the output voltage from the fully illuminated element n is:

$$V_o = - V(R_F/(R_F/n)) = -nV$$

For the case when the illumination stripe 180 falls partially on the element n, and partially on the element n + 1, the photo diode currents are:

$$i_n = mi$$
$$i_{n+1} = (l-m)i$$

where m is the fraction of the reflected light beam that falls on the element n. In this case, the output voltage from the amplifier 182 is:

$$-V_o = ni_nR + (n+l)i_{n+l}R$$
$$-V_o = (mn + (n+l)(l-m))iR$$
$$V_o = -[n+(l-m)] V$$

This correctly indicates that the stripe 180 is centered at element n plus a fraction (i-m) of the next element, (n+i). If m = l, all light is falling on element n. If m = o, the stripe shifts fully toward element n + l, as indicated by the formula. Thus, the detector and associated circuit form a linear analog indicator for stripe position.

Fig. 7 depicts a second photo detector array 90 having a central null position indicated by 0 and individual photo diode elements indicated by 1 through 5 and -1 through -5. Each half of the array elements (i.e., 1 through 5 and -1 through -5) is connected to a resistor summing network 92 and 93, each network being the same as the resistor network of Fig. 6. The outputs $V_1$ and $V_2$ of the two networks 92 and 93, respectively, are combined in a difference amplifier 94 to produce an output voltage $V_o$. The depicted embodiment of Fig. 7 has two functions: (1) to provide a null position centered at element 0 (referenced to ground) and positive and negative directional information with respect to the null elements; and (2), to minimize background noise by cancelling out variations in the illumination surrounding the stripe 91. Any variation in light intensity common to all elements of the array 90, such as background illumination, is cancelled since equal illumination seen by array elements n and -n would sum to zero. If desired, a photo detector array element maybe positioned at the null location 0 in the array 90 and monitored independently of the other array elements to assure that a 0 output from the circuit corresponds to perfect alignment of the beam 91 on the null position and not the absence of a beam. The magnitude of the output voltage $V_o$ is proportional to the distance of the beam 91 away from the null position 0 on the detector 90 and its sign indicates direction from the null.

Even with the configuration of Fig. 7, however, one concern must be addressed, and that is the effect that data tracks, which may not be present (depending upon whether data has yet been written onto the disk), will have on the output signal. The presence of such data tracks will cause variations in the background reflected light that may fall unevenly on the fact of the detector 31. Thus, in order to prevent this varying and unknown background light from adversely affecting the true location of the stripe position, some compensation or correction means must be employed. One suitable means is to use a threshold detector, or equivalent, to eliminate the one-sided effects of the data track background light from the output voltages $V_1$, and $V_2$, prior to combining these voltages in the difference amplifier 94. Such a threshold detector advantageously could be designed into the summing amplifiers 95 and 96 by one skilled in the art.

Fig. 8 depicts the voltage output of the circuit of Fig. 7 with respect to the central null 0 (ground) as a beam 91 sweeps across the elements of the array 90 during radial movement of the moving optical head 40. The output of each element of the array 90 changes proportionally with the distance traveled. A slight horizontal stair step, greatly exaggerated in FIG. 8, is introduced by optical dead spots between each pair of the array elements n and n + l. As the reflected light beam 91, from any particular servo track passes off the face of the array 90, a new reflected beam from an adjoining servo track is received at the opposite end of the array generating the large saw tooth effect depicted.

## Claims

1. An optical disk storage system for reading data from or writing data to a removable disk surface (11) having a rotational axis (10) and a plurality of data bands (12, 13, 14), each data band (12, 13, 14) including a plurality of concentric data tracks (21) equally spaced about the rotational axis (10), the system including means for rotating the disk surface (11) about the rotational axis (10), an optical head (23) positioned adjacent to the disk surface (11) for reading or writing or both, means for positioning (24) said optical head (23) with respect to the disk surface (11) in a radial direction, means (25a, 82) for projecting a plurality of read/write light beams (52', 82') through said optical head (23) onto the disk surface (11) to a desired one of the data tracks (21) within a desired one of the data bands (12, 13, 14), a coarse tracking servo system (16, 17, 18, 19, 30, 31, 34, 36) comprising a plurality of concentric optically readable servo tracks (16, 17, 18, 19) equally spaced about the rotational axis (10) of the disk surface (11), each servo track (16, 17, 18, 19) disposed between adjacent pairs of the data bands (12, 13, 14), a coarse illuminator (30) for generating a coarse beam (73') that is separable and distinct from said read/write light beams (52', 82'), means for directing (36, 27) said coarse beam (73') to the disk surface (11) along an optical path through said optical head (23) so that said coarse beam (73') illuminates a portion (11a) of the disk surface (11) including at least one servo track (16, 17, 18, 19) within said illuminated portion (11a) of the disk surface (11), means for directing (27, 36) an image plane (32) of said portion (11a) of the disk surface (11) illuminated by said coarse beam (73') onto a detector (31), said detector (31) including means for generating (34) an error signal ($V_o$) representative of a distance that an image (32) of said at least one illuminated servo track (16, 17, 18, 19) within said image plane (32) is from a desired null position on a surface of said detector (31), means for coupling said error signal ($V_o$) to said optical head positioning means (24), said optical head positioning means (24) responding to said error signal (V0) so as to move said optical head (23) in a direction that maintains said at least one illuminated servo track (16, 17, 18, 19) image (32) at said desired null position of said detector (31), means for combining (60) said read/write light beams (52', 82') into said optical path as said read/write light beams (52', 82') travel towards said disk surface (11), and for separating said read/write light beams (52', 82') out of said optical path as said read/write light beams (52', 82') return from the disk surface (11), said beam combining and separating means (27) effectively decoupling said coarse tracking servo system (16, 17, 18, 19, 30, 31, 34, 36) from said projection means (25a, 82), whereby said optical head (23) is maintained in a desired tracking position relative to said at least one illuminated servo track (16, 17, 18, 19) independent of said projecting means (25a, 82), said optical disk storage system **characterized by:** a fine tracking servo system (25a, 25b, 25c, 25d, 26) for generating fine tracking error signals that are indicative of an off track condition of said plurality of read/write light beams (52', 82') from said desired track (21), said coarse beam (73') continuously illuminating a portion (11a) of the disk surface (11) that spans at least a distance between two servo tracks (16, 17, 18, 19) through said directing means, thereby always including at least one servo track (16, 17, 18, 19) as well as the desired data tracks (21) accessed by said read/write light beams (52', 82') within said continuously illuminated portion (11a) of the disk surface (11).

2. The system recited in claim 1 wherein said coarse tracking servo system (16, 17, 18, 19, 30, 31, 34, 36) comprises:
a photo detector array (31) having light (82') returned from said portion (11a) of said optical disk surface (11) imaged (32) thereon and producing an output signal representing the position of said image plane (32) returned from a servo track (16, 17, 18, 19).

3. The system recited in claim 1 wherein said fine tracking servo system (25a, 25b, 25c, 26) follows a first of said data tracks (21) while said optical head (23) projects a write beam (52') to write data in a second data track (21) that is a prescribed distance from said first data track (21).

4. The system recited in claim 3 wherein the output of the coarse tracking servo system (16, 17, 18, 19, 30, 31, 34, 36) is connected to said means (24) for positioning and controls the optical head (23) position with respect to said optical disk (11), and wherein said fine tracking servo system is connected to said means (25a, 82) for projecting and controls the positioning of said read/write light beams (52', 82'), whereby said coarse tracking servo system (16, 17, 18, 19, 30, 31, 34, 36) and said fine tracking servo system (25, 26, 27) work in concert to access a desired track (21) on said disk (11), but wherein said coarse tracking servo system (16, 17, 18, 19, 30, 31, 34, 36) and said fine tracking servo system (25, 26, 27) are decoupled from each other.

5. The system recited in claim 1 wherein said image plane (32) projected on said detector (31) is returned from at least one servo track (17) and said detector (31) comprises:
an array of photo-electrical elements (181); means (R, $R_1$, $R_2$, $R_3$, $R_4$, $R_5$) connected to the electrical outputs of said array of photo-electrical elements (181) for generating a characteristic voltage identifying each said element when illuminated; and means (182, $R_F$) for combining said characteristic voltages to identify the ones of said array of photo-electrical elements (181) being illuminated.

6. The system of claim 1 wherein said optical head positioning means (24) comprises a voice coil motor.

7. A method for controlling the positioning of the read/write beams (52', 82') on the optical disk surface (11) of a data storage system that includes an optical disk (11) for storing information, said optical disk (11) having recorded thereon a plurality of data bands (12, 13, 14), each data band (12, 13, 14) including a servo track (16, 17, 18, 19) and a plurality of data tracks (21), said data storage system including an optical head (23) movable radially with respect to the optical disk surface (11) and means for projecting (25a, 82) one or more read/write light beams (52', 82') through the optical head (23) onto the optical disk surface (11) for reading or writing data, said means for projecting (25a, 82) including means (25, 26, 27) for independently moving the read/write beams (52', 82') radially with respect to the optical disk surface (11) independent of any movement of said optical head (23), including the steps of:
(1) independently positioning said optical head (23) at a desired location with respect to the optical disk surface (11) by:
continuously illuminating a portion (11a) of the disk surface (11) that spans at least a distance between two servo tracks (16, 17, 18, 19), thereby always including at least one servo track (16, 17, 18, 19) as well as the desired data tracks (21) with a first light beam (82') projected from said optical head (23) onto said optical disk surface (11), detecting light (32) returned from the illuminated servo track (17) within the illuminated data band (12) with a first detector (31), and positioning the optical head (23) as a result of the detection performed by said first detector (31); and

(2) independently positioning the read/write beams (52', 82') on the optical disk surface (11) **characterized by:** the steps of:

illuminating at least one of said data tracks (21) with a second light beam (52', 82') projected from said optical head (23) onto said optical disk surface (11), detecting light returned from the illuminated data track (21) with a second detector (25b), and

moving the read/write beams (52', 82') with said beam movement means (25, 26, 27) as a result of the detection performed by said second detector (25b).

8. The system of claim 2 wherein said output signal comprises an error signal ($V_o$) that represents the distance that the servo track image (32) is from a desired position on said array of photo-electrical elements (181), and further wherein said error signal ($V_o$) controls the positioning of said optical head (23) so as to maintain the servo track image (32) as said desired position on said array of photo-electrical elements (181), whereby the relative position of said optical head (23) with respect to said optical disk surface (11) is maintained substantially constant regardless of alignment errors associated with mounting the optical disk (11) about its rotational axis (10).

9. The system of claim 8 wherein the servo tracks (16, 17, 18, 19) have a width that is at least three times the width of the data tracks (21).

10. The system of claim 9 wherein the servo tracks (16, 17, 18, 19) occupy no more than 5% of the usable surface of said optical disk surface (11).

## Revendications

1. Système de mémorisation optique sur disque destiné à lire des données ou écrire des données sur une surface (11) d'un disque amovible ayant un axe de rotation (10) et plusieurs bandes de données (12, 13, 14), chaque bande de données (12, 13, 14) comprenant plusieurs pistes concentriques de données (21) régulièrement espacées autour de l'axe de rotation (10), le système comprenant un dispositif destiné à faire tourner la surface du disque (11) autour de l'axe de rotation (10), une tête optique (23) placée près de la surface du disque (11) afin qu'elle lise ou écrive ou lise et écrive, un dispositif (24) de positionnement de la tête optique (23) par rapport à la surface du disque (11) en direction radiale, un dispositif (25a, 82) de projection de plusieurs faisceaux lumineux de lecture-écriture (52', 82') par l'intermédiaire de la tête optique (23) à la surface du disque (11) sur une piste voulue parmi les pistes de données (21) contenues dans l'une des bandes de données (12, 13, 14), un système d'asservissement grossier de poursuite (16, 17, 18, 19, 30, 31, 34, 36) comprenant plusieurs pistes concentriques d'asservissement qui peuvent être lues optiquement (16, 17, 18, 19) et régulièrement espacées autour de l'axe de rotation (10) de la surface du disque (11), chaque piste d'asservissement (16, 17, 18, 19) étant disposée entre des paires adjacentes de bandes de données (12, 13, 14), un appareil d'éclairement grossier (30) destiné à créer un faisceau grossier (73') qui peut être séparé et qui est distinct des faisceaux lumineux de lecture-écriture (52', 82'), un dispositif (36, 27) destiné à diriger le faisceau grossier (73') vers la surface du disque (11) suivant un trajet optique passant par la tête optique (23) afin que le faisceau grossier (73') éclaire une partie (11a) de la surface du disque (11) comprenant au moins une piste d'asservissement (16, 17, 18, 19) dans la partie éclairée (11a) de la surface du disque (11), un dispositif (27, 36) destiné à diriger un plan image (32) de ladite partie (11a) de la surface du disque (11) éclairée par le faisceau grossier (73') sur un détecteur (31), ce détecteur (31) comprenant un dispositif (34) destiné à créer un signal d'erreur ($V_o$) représentatif de la distance comprise entre une image (32) d'une piste d'asservissement éclairée au moins (16, 17, 18, 19) contenue dans le plan image (32) par rapport à une position neutre voulue sur une surface du détecteur (31), un dispositif destiné à coupler le signal d'erreur ($V_o$) au dispositif (24) de positionnement de la tête optique, ce dispositif (24) de positionnement répondant au signal d'erreur ($V_o$) de manière qu'il déplace la tête optique (23) dans le sens qui maintient l'image (32) de la piste d'asservissement éclairée au moins (16, 17, 18, 19) à la position neutre voulue du détecteur (31), un dispositif (60) de combinaison des faisceaux lumineux de lecture-écriture (52', 82') sur le trajet optique lorsque les faisceaux lumineux de lecture-écriture (52', 82') se déplacent vers la surface du disque (11), et destiné à séparer les faisceaux lumineux de lecture-écriture (52', 82') du trajet optique lorsque les faisceaux lumineux de lecture-écriture (52', 82') reviennent de la surface du disque (11), le dispositif (27) de combinaison et de séparation de faisceau découplant en fait le système d'asservissement grossier de poursuite (16, 17, 18, 19, 30, 31, 34, 36) du dispositif de projection (25a, 82), si bien que la tête optique (23) est maintenue en position voulue de poursuite par rapport à ladite piste d'asservissement éclairée au moins (16, 17, 18, 19) indépendamment du dispositif de projection (25a, 82), le système de mémorisation optique sur disque étant caractérisé par un système d'asservissement fin de poursuite (25a, 25b, 25c, 25d, 26) destiné à créer des signaux d'erreur de poursuite fine qui sont représentatifs d'une condition de décalage par rapport à une piste des faisceaux lumineux de lecture-écriture (52', 82') par rapport à la piste voulue (21), le faisceau grossier (73') éclairant constamment une partie (11a) de la surface du disque (11) qui recouvre au moins la distance comprise entre deux pistes d'asservissement (16, 17, 18, 19) par l'intermédiaire du dispositif destiné à diriger, si bien qu'elle contient toujours au moins une piste d'asservissement (16, 18, 19) ainsi que les pistes de données voulues (21) auxquelles ont accès les faisceaux lumineux de lecture-écriture (52', 82') dans la partie constamment éclairée (11a) de la surface du disque (11).

2. Système selon la revendication 1, dans lequel le système d'asservissement grossier de poursuite (16, 17, 18, 19, 30, 31, 34, 36) comporte une matrice photodétectrice (31) sur laquelle est formée l'image (32) de la lumière (82') renvoyée par ladite partie (11a) de la surface du disque optique (11) et créant un signal de sortie représentant la position du plan image (32) renvoyé par une piste d'asservissement (16, 17, 18, 19).

3. Système selon la revendication 1, dans lequel le système d'asservissement fin de poursuite (25a, 25b, 25c, 26) suit une première des pistes de données (21) lorsque la tête optique (23) projette un faisceau d'écriture (52') destiné à écrire des données dans une seconde piste de données (21) qui se trouve à une distance prescrite de la première piste de données (21).

4. Système selon la revendication 3, dans lequel le signal de sortie du système d'asservissement grossier de poursuite (16, 17, 18, 19, 30, 31, 34, 36) est transmis au dispositif (24) de positionnement et règle la position de la tête optique (23) par rapport au disque optique (11), et dans lequel le système d'asservissement fin de poursuite est relié au dispositif (25a, 82) de projection et règle la position des faisceaux lumineux de lecture-écriture (52', 82'), de manière que le système d'asservissement grossier de poursuite (16, 17, 18, 19, 30, 31, 34, 36) et le système d'asservissement fin de poursuite (25, 26, 27) travaillent ensemble pour assurer l'accès à une piste voulue (21) sur le disque (11), mais dans lequel le système d'asservissement grossier de poursuite (16, 17, 18, 19, 30, 31, 34, 36) et le système d'asservissement fin de poursuite (25, 26, 27) sont découplés l'un de l'autre.

5. Système selon la revendication 1, dans lequel le plan image (32) projeté sur le détecteur (31) est renvoyé par la piste d'asservissement au moins (17) et le détecteur (31) comporte :
une matrice d'éléments photoélectriques (181),
un dispositif (R, R$_1$, R$_2$, R$_3$, R$_4$, R$_5$) connecté aux sorties électriques de la matrice d'éléments photoélectriques (181) et destiné à créer une tension caractéristique identifiant chaque élément lorsqu'il est éclairé, et
un dispositif (182, R$_F$) destiné à combiner les tensions caractéristiques afin qu'il identifie celles des éléments photoélectriques (181) de la matrice qui sont éclairés.

6. Système selon la revendication 1, dans lequel le dispositif (24) de positionnement de la tête optique comporte un moteur à bobine mobile.

7. Procédé de réglage de la position de faisceau de lecture-écriture (52', 82') à la surface d'un disque optique (11) d'un système de mémorisation de données qui comporte un disque optique (11) destiné à contenir des informations, le disque optique (11) portant un enregistrement sous forme d'une plusieurs bandes de données (12, 13, 14), chaque bande de données (12, 13, 14) comprenant une piste d'asservissement (16, 17, 18, 19) et plusieurs piste de données (21), le système de mémorisation de données comprenant une tête optique (23) mobile radialement par rapport à la surface du disque optique (11) et un dispositif (25a, 82) destiné à projeter un ou plusieurs faisceaux lumineux de lecture-écriture (52', 82') par l'intermédiaire de la tête optique (23) à la surface du disque optique (11) pour la lecture ou l'écriture de données, le dispositif (25a, 82) de projection comprenant un dispositif (25, 26, 27) de déplacement indépendant des faisceaux de lecture-écriture (52', 82') radialement par rapport à la surface du disque optique (11) indépendamment de tout déplacement de la tête optique (23), le procédé comprenant les étapes suivantes :

(1) le positionnement indépendant de la tête optique (23) à un emplacement voulu par rapport à la surface du disque optique (11) par

éclairement continu d'une partie (11a) de la surface du disque (11) qui couvre au moins la distance comprise entre deux pistes d'asservissement (16, 17, 18, 19) afin qu'elle comprenne toujours au moins une piste d'asservissement (16, 17, 18, 19) ainsi que les pistes voulues de données (21), avec un premier faisceau lumineux (82') projeté par la tête optique (23) à la surface du disque optique (11), et la détection de lumière (32) renvoyée par la piste d'asservissement éclairée (17) dans la bande de données éclairée (12) avec un premier détecteur (31), et le positionnement de la tête optique (23) à la suite de la détection réalisée par le premier détecteur (31), et

(2) le positionnement indépendant des faisceaux de lecture-écriture (52', 82) à la surface du disque optique (11), caractérisé par les étapes suivantes :

l'éclairement de l'une au moins des pistes de données (21) avec un second faisceau lumineux (52', 82') projeté par la tête optique (23) à la surface du disque optique (11),

la détection de la lumière revenant de la piste optique éclairée (21) avec un second détecteur (25b), et

le déplacement des faisceaux de lecture-écriture (52', 82') avec le dispositif de déplacement de faisceau (25, 26, 27) à la suite de la détection réalisée par le second détecteur (25b).

8. Système selon la revendication 2, dans lequel le signal de sortie comporte un signal d'erreur ($V_o$) qui représente la distance à laquelle se trouve l'image de la piste d'asservissement (32) par rapport à une position voulue sur la matrice d'éléments photoélectriques (181), et en outre dans lequel le signal d'erreur ($V_o$) règle le positionnement de la tête optique (23) afin que l'image (32) de la piste d'asservissement soit maintenue en position voulue sur la matrice d'éléments photoélectriques (181), si bien que la position relative de la tête optique (23) par rapport à la surface du disque optique (11) est conservée à une valeur pratiquement constante quelles que soient les erreurs d'alignement associées au montage du disque optique (11) autour de son axe de rotation (10).

9. Système selon la revendication 8, dans lequel les pistes d'asservissement (16, 17, 18, 19) ont une largeur qui est au moins égale à trois fois la largeur des pistes de données (21).

10. Système selon la revendication 9, dans lequel les pistes d'asservissement (16, 17, 18, 19) n'occupent pas plus de 5 % de la surface utilisable du disque optique (11).

**Ansprüche**

1. Optisches Speicherplattensystem zum Lesen von Daten von oder zum Schreiben von Daten auf eine austauschbare Diskettenoberfläche (12), die eine Drehachse (10) und eine Anzahl von Datenbändern (12, 13, 14) aufweist, wobei jedes Datenband (12, 13, 14) eine Vielzahl von konzentrischen Datenspuren (21) besitzt, die um die Drehachse (10) gleichmäßig beabstandet sind, wobei das System Mittel zum Drehen der Diskettenoberfläche (11) um die Drehachse (10) aufweist, ein optischer Kopf (23) in der Nähe der Diskettenoberfläche (11) angeordnet ist, um zu lesen oder zu schreiben, oder um beides zu tun, Positioniermittel (24) für den optischen Kopf (23) in bezug auf die Diskettenoberfläche (11) in einer radialen Richtung, mit Mitteln (25a, 82) zum Projizieren einer Anzahl von Lese-/Schreib-Lichstrahlen (52', 82') durch den optischen Kopf (23) auf die Diskettenoberfläche (11) auf eine ausgewählte Datenspur (21) in einem der gewünschten Datenbänder (12, 13, 14), mit einem groben Spurverfolgungs-Servosystem (16, 17, 18, 19, 30, 31, 34, 36), das eine Anzahl von konzentrischen, optisch lesbaren Servospuren (16, 17, 18, 19) aufweist, die um die Drehachse (10) der Diskettenoberfläche (11) gleichmäßig beabstandet sind, wobei jede Servospur (16, 17, 18, 19) zwischen benachbarten Paaren von Datenbändern (12, 13, 14) angeordnet ist, mit einer groben Lichtquelle (30) zur Erzeugung eines groben Strahls (73') der von den Lese-/Schreib-Lichtstrahlen (52', 82') trennbar ist und sich davon unterscheidet, mit Mitteln (36, 27) zum Lenken des groben Strahls (73') auf die Diskettenoberfläche (11) entlang eines optischen Pfades durch den optischen Kopf (23) in der Weise, daß der grobe Strahl (73') einen Teil (11a) der Diskettenoberfläche (11) belich-tet, die mindestens eine Servospur (16, 17, 18, 19) in dem bestrahlten Teil (11a) der Disket-tenoberfläche (11) einschließt, mit Mitteln (27, 36) zum Lenken einer Bildebene (32) auf den Teil (11a) der Diskettenoberfläche (11), der von dem groben Strahl (73') belichtet ist, auf einen Detektor (31), wobei der Detektor (31) Mittel (34) zum Erzeugen eines Fehlersignals ($V_o$) aufweist, das eine Distanz darstellt, die das Bild (32) der mindestens einen belichteten Servospur (16, 17, 18, 19) innerhalb der Bildebene (32) von einer gewünschten Nullposition auf einer Oberfläche des Detektors (31) entfernt ist, mit Mitteln zum Ankoppeln des Fehlersignals ($V_o$) an die Positioniereinrichtung (24) für den optischen Kopf, wobei diese Kopfpositioniereinrichtung (24) auf das Fehlersignal ($V_o$) anspricht, um den optischen Kopf (23) in eine Richtung zu bewegen, die zumindest ein belichtetes Servorspur-(16, 17, 18, 19)Bild (32) in der gewünschten Nullposition des Detektors (31) hält, mit Mitteln (60) zum Zusammenfassen der Lese-/Schreib-Lichtstrahlen (52', 82') zu dem optischen Pfad, wenn die Lese-/Schreib-Lichtstrahlen (52', 82') in Richtung auf die Diskettenoberfläche (11) laufen, und zum Abtrennen der Lese-/Schreib-Lichtstrahlen (52', 82') von dem optischen Pfad, wenn die Lese-/Schreib-Lichtstrahlen (52', 82') von der Diskettenoberfläche (11) zurücklaufen, wobei die Einrichtung (27) zum Zusammenfassen und Abtrennen des Strahls das grobe Spurverfolgungs-Servosystem (16, 17, 18, 19, 30, 31, 34, 36) von den Projiziermitteln (25a, 82) wirksam abkoppelt, so daß der optische Kopf (23) in einer gewünschten Spurverfolgungsposition in bezug auf die mindestens eine belichtete Servospur (16, 17, 18, 19) unabhängig von den Projektionsmitteln (25a, 82) gehalten wird, wobei das optische Plattenspeichersystem **gekennzeichnet** ist durch:

ein Spurverfolgungs-Servosystem (25a, 25b, 25c, 25d, 26) zum Erzeugen von feinen Spurverfolgungs-Fehlersignalen, die Spurabweichungszustände in der Anzahl der Lese-/Schreib-Lichtstrahlen (52', 82') von der gewünschten Spur (21) anzeigen, wobei der grobe Strahl (73') einen Teil (11a) der Diskettenoberfläche (11) kontinuierlich belichtet, der mindestens eine Distanz zwischen zwei Servospuren (16, 17, 18, 19) überdeckt, und zwar durch die Richtungsmittel, wodurch immer mindestens eine Servospur (16, 17, 18, 19) sowie die gewünschten Datenspuren (21), die von den Lese-/Schreib-Lichtstrahlen (52', 82') erfaßt werden, in den kontinuierlich belichteten Teil (11) der Diskettenoberfläche (11) eingeschlossen sind.

2. System nach Anspruch 1, wobei das grobe Spurverfolgungs-Servosystem (16, 17, 18, 19, 30, 31, 34, 36) aufweist:
eine Fotodetektoranordnung (31) für die Licht (82') von dem Teil (11a) der optischen Disket-

tenoberfläche (11) zurückgeworfen wird, die darauf abgebildet (32) ist, und wobei ein Ausgabesignal erzeugt wird, das die Position der Bildebene (32) angibt, die von einer Servospur (16, 17, 18, 19) zurückgeworfen wurde.

3. System nach Anspruch 1, wobei das feine Spurverfolgungs-Servosystem (25a, 25b, 25c, 26) einer ersten der Datenspuren (21) folgt, während der optische Kopf (23) einen Schreibstrahl (52') projiziert, um Daten in eine zweite Datenspur (21) zu schreiben, die eine vorgegebene Distanz von der ersten Datenspur (21) beabstandet ist.

4. System nach Anspruch 3, wobei die Ausgabe des groben Spurverfolgungs-Servosystems (16, 17, 18, 19, 30, 31, 34, 36) an die Mittel (24) zum Positionieren und Steuern der Lage des optischen Kopfes (23) in bezug auf die optische Platte (11) angeschlossen ist, und wobei das feine Spurverfolgungs-Servosystem an die Mittel (25a, 82) zum Projizieren und Steuern der Positionierung der Lese-/Schreib-Lichtstrahlen (52', 82') angeschlossen ist, wodurch das grobe Spurverfolgungs-Servosystem (16, 17, 18, 19, 30, 31, 34, 36) und das feine Spurverfolgungs-Servosystem (25, 26, 27) zusammenwirken, um eine gewünschte Spur (21) auf der Scheibe (11) zu erfassen, aber wobei das grobe Spurverfolgungs-Servosystem (16, 17, 18, 19, 30, 31, 34, 36) und das feine Spurverfolgungs-Servosystem (25, 26, 27) voneinander abgekoppelt sind.

5. System nach Anspruch 1, wobei die von dem Detektor (31) projizierte Bildebene (32) von mindestens einer Servospur (17) zurückgeworfen wird und der Detektor (31) aufweist:
eine Anordnung von fotoelektrischen Elementen (181);
Mittel (R, $R_1$, $R_2$, $R_3$, $R_4$, $R_5$), die an die elektrischen Ausgänge der Anordnung von fotoelektrischen Elementen (181) angeschlossen sind, um eine charakteristische Spannung zu erzeugen, die jedes der Elemente bei Belichtung identifiziert; und
Mittel (182, $R_F$) zum Zusammenfassen der charakteristischen Spannungen für die Identifizierung derjenigen Elemente der Anordnung von fotoelektrischen Elementen (181), die belichtet werden.

6. System nach Anspruch 1, wobei die Positioniereinrichtung (24) für den optischen Kopf einen Tauchspulenmotor aufweist.

7. Verfahren zum Steuern der Positionierung der Lese-/Schreib-Lichtstrahlen (52', 82') auf der optischen Plattenoberfläche (11) eines Datenspeichersystems, das eine optische Platte (11) zum Speichern von Informationen aufweist, wobei die optische Platte (11) eine Vielzahl von Datenbändern (12, 13, 14) aufgezeichnet hat, von denen jedes Datenband (12, 13, 14) eine Servospur (16, 17, 18, 19) und eine Anzahl von Datenspuren (21) aufweist, und wobei das Datenspeichersystem einen optischen Kopf (23) besitzt, der in bezug auf die optische Plattenoberfläche radial bewegbar ist und wobei Mittel zum Projizieren (25a, 82) von einem oder mehreren Lese-/Schreib-Lichtstrahlen (52', 82') durch den optischen Kopf (23) auf die optische Plattenoberfläche (11) vorgesehen sind, um Daten zu lesen oder zu schreiben, wobei die Mittel zum Projizieren (25a, 82) Mittel (25, 26, 27) einschließen, um die Lese-/Schreib-Lichtstrahlen (52', 82') in bezug auf die optische Plattenoberfläche (11) unabhängig von irgendeiner Bewegung des optischen Kopfes (23) radial zu bewegen, mit den Schritten:

(1) unabhängiges Positionieren des optischen Kopfes (23) an einer gewünschten Stelle in bezug auf die optische Plattenoberfläche (11) durch:

kontinuierliches Belichten eines Teils (11a) der Plattenoberfläche (11), die mindestens den Abstand zwischen zwei Servospuren (16, 17, 18, 19) umfaßt, wodurch immer mindestens eine Servospur (16, 17, 18, 19) sowie die gewünschten Datenspuren (21) mit einem ersten Lichtstrahl (82') angeschlossen sind, der von dem optischen Kopf (23) auf die optische Plattenoberfläche (11) projiziert wird, es wird Licht (32) erfaßt, das von der belichteten Servospur (17) innerhalb des belichteten Datenbandes (12) zurückgeführt wird, und zwar mit einem ersten Detektor (31), und durch Positionieren des optischen Kopfes (23) als Folge der von dem ersten Detektor (31) durchgeführten Erkennung; und

(2) unabhängiges Positionieren der Lese-/Schreib-Lichtstrahlen (52', 82') auf der optischen Plattenoberfläche (11), **gekennzeichnet** durch die Schritte:

Belichten von mindestens einer der Datenspuren (21) mit einem zweiten Lichtstrahl (52', 82'), der von dem optischen Kopf (23) auf die optische Plattenoberfläche (11) geworfen wird, Erfassen des von der belichteten Datenspur (21) zurückkehrenden Lichts mit einem zweiten Detektor (25b), und Bewegen der Lese-/Schreib-Lichtstrahlen (52', 82') mit den Strahlbewegungsmitteln (25, 26, 27) als Folge der von dem zweiten Detektor (25b) durchgeführten Erfassung.

8. System nach Anspruch 2, wobei das Ausgabesignal ein Fehlersignal ($V_o$) enthält, das die Distanz darstellt, die das Servospurbild (82) von einer gewünschten Position auf der Anordnung von fotoelektrischen Elementen (181) beabstandet ist, und wobei ferner das Fehlersignal ($V_o$) die Positionierung des optischen Kopfes (23) steuert, um das Servospurbild (23) als die gewünschte Position auf der Anordnung von fotoelektrischen Elementen (181) beizubehalten, wodurch die relative Lage des optischen Kopfes (23) in bezug auf die optische Plattenoberfläche (11) im wesentlichen konstant gehalten wird, und zwar unabhängig von Ausrichtungsfehlern, die der Anordnung der optischen Platte (11) um ihre Drehachse (10) zugeordnet sind.

9. System nach Anspruch 8, wobei die Servospuren (16, 17, 18, 19) eine Breite haben, die mindestens dreimal so groß wie die Breite der Datenspuren (21) ist.

10. System nach Anspruch 9, wobei die Servospuren (16, 17, 18, 19) nicht mehr als 5% der verwendbaren Oberfläche der optischen Plattenoberfläche einnehmen.

FIG. I

FIG. 2

FIG. 3

FIG. 4

SERVO TRACK

DATA TRACK

OTHER DATA TRACKS

SERVO TRACK

17

21
21'
22c
22b
22a
21"

18

FIG. 5

V

O

FIG. 8

FIG. 6

FIG. 7